Europäisches Patentamt

(19) European Patent Office

Office européen des brevets

(11) Publication number: **0 010 385**
**B1**

## EUROPEAN PATENT SPECIFICATION

(12)

(45) Date of publication of patent specification: 07.03.84

(21) Application number: 79302116.3

(22) Date of filing: 04.10.79

(51) Int. Cl.³: **C 04 B  43/02, C 21 D  9/70, F 16 L  59/14, F 27 B  9/34**

(54) Ceramic fibre refractory member for insulating a pipe.

(30) Priority: 12.10.78 US  950633
19.01.79 US  4629
26.02.79 US  15497

(43) Date of publication of application:
30.04.80 Bulletin 80/9

(45) Publication of the grant of the patent:
07.03.84 Bulletin 84/10

(84) Designated Contracting States:
AT BE CH DE FR GB IT LU NL SE

(56) References cited:
DE - A - 2 700 374
DE - U - 7 031 431
GB - A - 1 506 152
US - A - 2 884 879
US - A - 3 941 160
US - A - 3 995 665

IRON AND STEEL ENGINEER, Volume 55, No. 2
February 1978, Pittsburgh M.W. VANCE et al.
"Application of skid pipe insulation in slab
reheating furnaces" pages 44 to 54

(73) Proprietor: Campbell, Frank, Jr.
2274, Broadlawn Drive
Houston Harris County Texas 77058 (US)

(72) Inventor: Campbell, Frank, Jr.
2274, Broadlawn Drive
Houston Harris County Texas 77058 (US)

(74) Representative: Westwood, Edgar Bruce et al,
STEVENS, HEWLETT & PERKINS 5, Quality Court
Chancery Lane
London WC2A 1HZ (GB)

Ceramic fibre refractory member for insulating a pipe

This invention relates to a ceramic fibre refractory member for insulating a pipe within a high temperature environment.

In furnaces used throughout the metallurgical and related industries to heat a slab, billet, bloom or other raw steel shape, a typical furnace includes a complex network of vertical and horizontal water-cooled pipes which support an additional network of horizontal water-cooled skid rails along which the slabs, billets, blooms, or other raw steel shapes are pushed or walked through the furnace. The metallurgical furnace is an open system; that is, heat which is transferred to the metal pipe network is conducted by the water flowing in the pipes to a point outside the furnace and is not recoverable. Accordingly, vast heat losses occur and correspondingly unnecessary amounts of energy are expended to replace the heat loss as a result of the heat transfer into the water-cooled pipe network. For example, as much as thirty to thirty-five percent of the total heat supplied to a metallurgical furnace by the combustion of fuels is lost in an infrastructure of uninsulated skid pipes and the supporting pipe network. For a 115 mm OD uninsulated water-cooled pipe in a furnace operating at 1300—1400°C, the heat loss is approximately 398,000—415,000 kJ per lineal meter per hour. For a furnace having 60 meters each of skid pipe, horizontal support pipe and vertical support pipe, the heat loss is thus approximately $180 \times 406,500$ kJ/hour or 73,170,000 kJ per hour.

To date, various types of refractory materials have been applied to the water-cooled pipe infrastructure in order to reduce the amount of heat loss from the furnace. US—A—3,941,160 discloses a refractory member for insulating a pipe within a high temperature environment, and comprising an arcuate body segment extending longitudinally between both ends of the member, a pair of longitudinally extending protuberances each of lesser length than the body segment and integrally connected thereto at one end while spaced angularly therefrom by a respective conforming recess so that a second similar refractory member is adapted to interlock with the first refractory member to form an annulus.

The members are made of a ceramic refractory material by classical methods of refractory manufacture such as pressing, casting or ramming. The refractory is a dense, prefired material which is quite heavy and brittle. To support the interlocking members on the pipe it is therefore necessary to weld metal studs onto the pipe, the studs extending through apertures preformed in the interlocking members.

Also disclosed in the above reference is the use of a fibrous blanket wrapped around the pipe and therefore underlying the refractory members. The purpose of the blanket is to provide additional insulation. The metal studs welded to the pipe directly transmit vibrations from the pipe to the refractory members which, because of their dense, brittle physical characteristics, begin to fracture and fall away from the pipe within a relatively short period. The blanket does not effectively act as a vibration damper because the refractory members are directly supported by the metal studs.

Also, the use of welded studs requires large expenditures of labour and time to strip the pipe and secure an additional refractory as a replacement.

Iron and Steel Engineer, Vol. 55, 2nd February, 1978, Pittsburg, discloses on page 46 at Table 1, Item 2, an insulation for furnace pipes comprising prefired vibrocast refractory tiles with interlocking shapes applied around a fibrous blanket wrapped around the pipe. The suggested area of application is mainly upright supports, and the reference states that the insulation disclosed is not successfully used on long skids or cross pipes, and is susceptible to vibration damage.

The above references therefore indicate the inherent friability and susceptibility to fracture of the heavy, brittle fired ceramic refractory materials hitherto proposed for the insulation of furnace pipes. As the metallic shape is moved along the metal skid rail, significant vibration and flexion of the water-cooled pipe infrastructure occur which are in turn transmitted into the friable, dense, rigid ceramic insulators. US—A—3,995,665 describes an insulation covering for the protection of cylindrical bodies e.g. pipes exposed to high thermal and mechanical stresses. The pipe to be insulated is surrounded by a plurality of individual insulation ring elements manufactured from a pliable, fibrous material e.g. aluminium silicate in the form of a non-woven felt. The use of this material as an insulator around the water-cooled pipe is unsatisfactory for a number of reasons: first, the material is susceptible to chemical reaction with scale and slag which is produced during the furnace operation; second, it is inherently susceptible to erosion by the velocities of the gases within the furnace; and third, it is too fibrous and thus porous.

DE—Al—2,700,374 and GB—A—1,506,152 disclose certain fibrous refractory mixes and the vacuum forming of the refractories in the form of tubes. The insulating shapes produced are intended for use to insulate a heat source from within, not without, and therefore no protection is necessary against slag and corrosive gases.

The prior art document GB—A—1,506,152 is describing a modification of the earlier document GB—A—1,328,493, which latter document describes how the service temperature of mineral wool as an insulating composition can be upgraded by mixing therewith a proportion of a modified insulating composition comprising an alumino-silicate refractory fibre admixed with a refractory ceramic fibre having a higher service temperature, and also refers to a general range of shapes in which the resulting refractory insulating fibre composition can be formed. There is no mention of interlocking shapes suitable for external application to pipes in a metallurgical furnace. The refractory shapes disclosed in the prior art document are all in the general context of replacements for applications where mineral wool and mineral wool based insulations would have previously been used, and the disclosure in the document does not suggest any wider utility. In particular, any indication of whether or not the refractory shapes produced in accordance with the teaching of the document may have properties that would render them suitable for the insulation of pipes in a metallurgical furnace in terms of resistance to attack by furnace gases and corrosive slag, light weight to assist the fitting of interlocking shapes to the pipes without means of attachment additional to the interlocking formations, coupled with adequate structural strength to resist vibration, and the reduction of crushing forces on an inner fibre blanket, is conspicuously absent from the teaching of the document and cannot be inferred therefrom.

The prior art thus reveals that covering an insulated blanket with a rigid prefired ceramic tile refractory has hitherto proven less than desirable. Fractures in the refractory and the failure to form an intimate fit among the refractory segments has in effect exposed the blanket underneath to the deleterious effects of the furnace noted above. Furthermore, the high specific weight of the prefired ceramic tile refractory has compressed the blanket underneath and has further chafed holes in the blanket from the movement of the tile on the blanket as the pipe is vibrated and flexed during furnace operations. It has also not been known hitherto that a blend of lightweight ceramic refractory fibre materials can be used in a furnace environment.

The invention is a refractory member as defined in the claims. It is suitable for insulating water-cooled pipes in a metallurgical furnace and is made of a blend of lightweight ceramic fibre materials having an overall low coefficient of thermal conductivity. It substantially reduces the energy expended in the manufacture of the refractory as well as the energy lost through the water-cooled pipes comprising the pipe network in a metallurgical furnace. The interlocking shape reduces the labour required to install the members in the furnace and allows for the members to be positioned around a water pipe without the use of additional anchoring devices such as metal studs welded to the pipe.

The refractory insulation in its commercial form includes two refractory members interlocked with one another around the pipe. Each member includes a partial cylindrical wall which is termed a body segment, and a pair of protuberances which are angularly spaced apart from the body segment by a corresponding pair of recesses. The body segment, protuberances and corresponding recesses of each shape all lie substantially in the same cylindrical surface of revolution so that the two members can be fitted together around a pipe to form an interlocking, tubular refractory unit which effectively insulates the water-cooled pipe inside the furnace. A series of units are fitted together in order to insulate an entire pipe.

The refractory member is made from lightweight ceramic fibres which are highly resistant to heat flow. The ceramic fibre refractory is much lighter in weight and is less brittle than the conventional preburned ceramic tiles and allows each pair of interlocking members to be longer longitudinally and to have a greater interlock surface area than previous interlocking cylindrical shapes made of preburned ceramic tiles. Hence, a more intimate fit is obtained which reduces the deleterious effects of high temperature convection and slag migration through the seams of the refractory which quickly destroy the effectiveness of a ceramic blanket located between the water-cooled pipe and the refractory shape. The combination of the shape and light weight ceramic fibres also permits the members to be applied to the pipe without any additional means to secure them to the pipe.

An even more intimate fit can be obtained by tapering the protuberances and the corresponding recesses so that the more forcefully the shapes are urged together, the more intimate is the fit between the segments.

For reasons of economy, a blend of ceramic fibres having differing thermal resistance and slag resistance is used in order to achieve a homogeneous refractory which is sufficiently resistant to furnace gases and corrosive slags. Although a separate inner ceramic fibre blanket positioned between the ceramic fibre shape and the water-cooled pipe is not necessary to the present invention, it assists to reduce even further the heat flow from the furnace to the water-cooled pipe and to act as a damper against vibrations and flexion in the pipe network which historically have shortened the effective life of a refractory covering.

The use of a light-weight, ceramic fibre refractory reduces the crushing forces on the inner blanket which historically have resulted from the massive weight of the preburned ceramic tiles. The reduction of the crushing forces, which forces compact and chafe the fibre blanket, extends both the useful life and the thermal effectiveness of the fibre blanket. Moreover, the coefficient of thermal conductivity of ceramic fibre is significantly lower than the prefired ceramic tiles presently in use. Hence, the resulting insulator is significantly more effective than present refractories in use with metallurgical furnaces.

The refractory members are formed on a perforated mould whose perforations are in communication with a vacuum source. A suitable slurry which can be maintained at room temperature includes a mixture of conventional basic fibre bulk material, a binder including a colloidal silica or colloidal alumina, a starch and a quantity of water. As the perforated vacuum mould is inserted into the slurry, the colloidal silica, a relatively small portion of the starch bond system and a majority of the water are drawn through the perforations while the ceramic fibres tend to form a bonded mat around the perforated mould. When the desired thickness is achieved, the mould is removed from the slurry. The exact ratio of the various fibres will depend upon the furnace temperatures encountered, the desired thickness of the refractory shape and is further affected by considerations of economy; that is, higher temperature and slag resistant, low thermally conductive fibres and more expensive than fibres having lower temperature and slag resistance but which possess a low thermal conductivity.

When the refractory is formed to the desired thickness, it is removed from the slurry. The perforated mould is removed from the refractory shape. The refractory shape is preferably placed upon a mandrel to maintain the shape of the refractory as it is cured in an oven and any necessary machining and cutting is performed. If the refractory is formed as a cylinder instead of two individual members, the cylindrical shape can then be cut to produce two members which are interlocking. The energy required to cure the vacuum-formed, ceramic fibre refractory is significantly less than the energy required to cure conventional preburned ceramic tile shapes. The resulting refractory member eliminates the need for the welding of metal studs to the pipe in order to anchor the refractory and the need to cement or band conventional semi-circular insulators presently used on water-cooled pipes. Hence, the labour expended on the installation of the refractory as described and claimed herein is remarkably reduced.

A single layer refractory requires less labour input during the vacuum forming and hence can be less expensive to manufacture than a laminated refractory, even though the inner layer of the laminated can be formed from a relative inexpense fibre bulk. Moreover, the lack of ceramic fibre interlace between laminations may form a discontinuity which can cause separation of the layers under extreme conditions.

Another form of the present invention includes a continuous spectrum of vacuum-formed, ceramic fibre materials having varying characteristics of thermal conductivity which gives a refractory having greater thermal and slag resistance at the outer surface than the inner surface. Such a construction can be obtained by rotating a female cylindrical mould so that the more dense, thermally resistant fibre materials migrate toward the outer portions of the refractory shape while the lighter, less thermally conductive fibres remain at the inner portions of the shape. Similarly, a female mould can be rotated while a more expensive, low thermally conductive material is applied to the mould as the content of the material being applied is altered to include an increasing amount of a less expensive, more thermally conductive ceramic fibre material.

The invention may be put into effect in the manner described below with reference to the accompanying drawings in which:—

Figure 1 is a perspective view of a typical water-cooled pipe network utilized in a metallurgical furnace;

Figure 2 is a perspective view showing a water-cooled pipe, a ceramic fibre blanket therearound, and interlocking refractory insulating members in accordance with one embodiment of the invention;

Figure 3 is an exploded view in perspective of the interlocking members of Figure 2 further showing the manner in which they interlock;

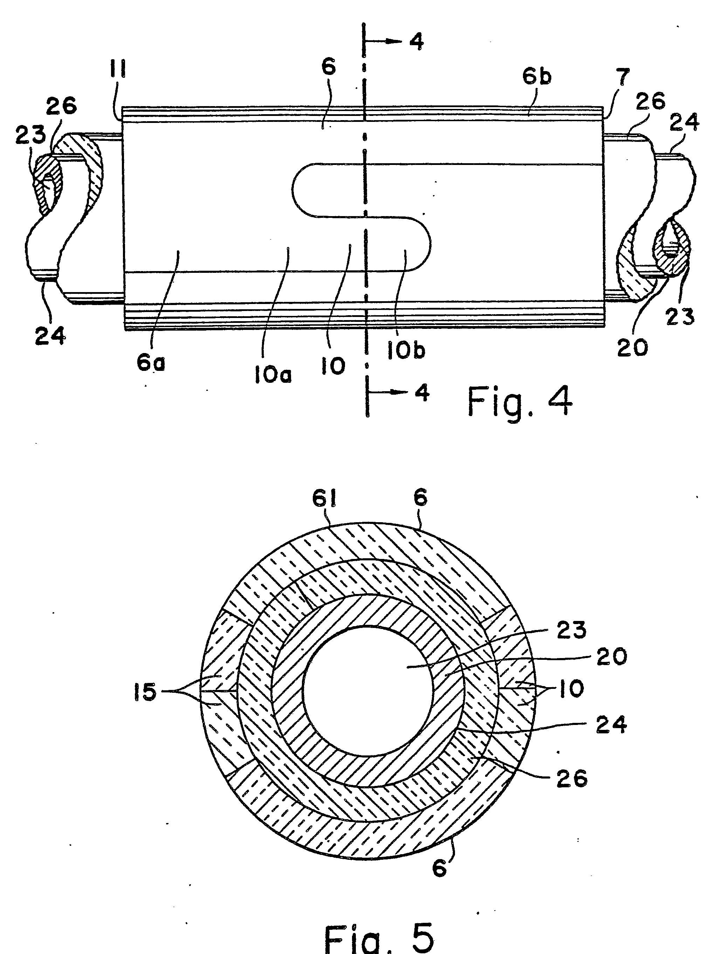

Figure 4 is a side elevational view generally showing two of the interlocked insulating members;

Figure 5 is a cross-section along line 4—4 in Figure 4;

Figure 6 is a side elevational view of members according to another embodiment of the invention; and

Figure 7 is an exploded view in perspective showing another embodiment of the invention in which two parallel pipes are insulated with substantially elliptical refractory members.

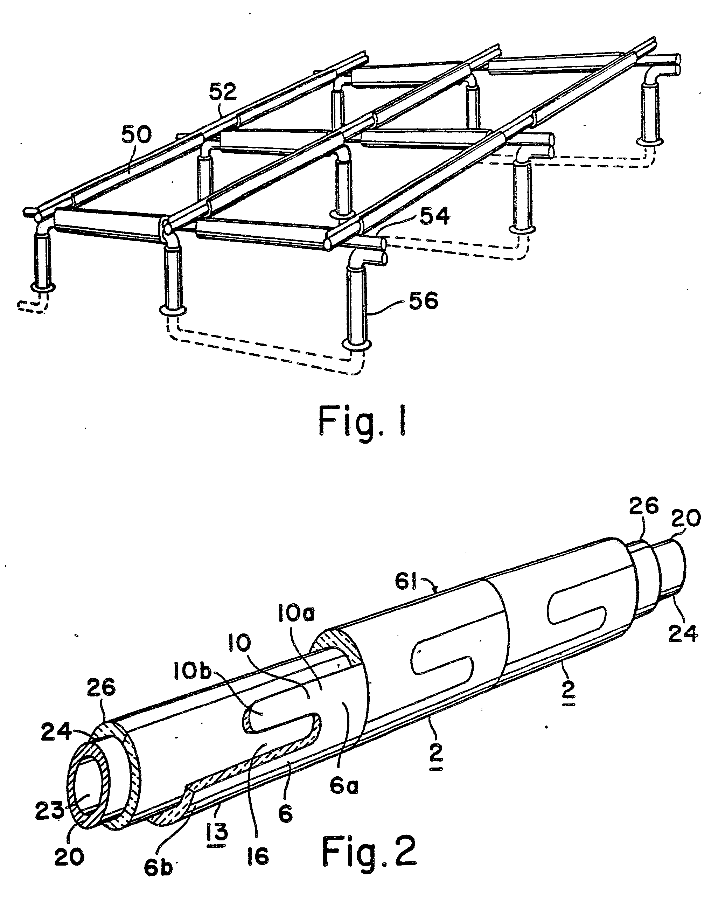

Figure 1 shows diagrammatically a pusher type metallurgical furnace having a series of parallel skid rails 50 each having a metal strip 52 which supports a non-illustrated slab as the slab is propelled across the skid rail system. Horizontal support pipes 54 and vertical support pipes 56 as well as the water-cooled skid rail 50 all conduct flowing water. The heat which is transferred from the interior of the furnace into the metal strip 52 is then conducted to a point outside the furnace by the water flowing in the water-cooled portion of the skid rail 50. The horizontal pipes 54 and vertical pipes 56, which form the infrastructure support system for the skid rails, also transmit heat from the furnace into water therein which flows to a point outside the furnace system.

Figure 2 shows a partially exploded view of a water-cooled pipe having two full units of a refractory insulation 2 plus a single member 13 in position around a pipe 20 having a bore 23 for transporting cooling water. Located around the exterior surface 24 of the water-cooled pipe 20 is a layer of a conventional high temperature pliable ceramic fibre blanket 26 which is known today in the industry. The thickness of the ceramic fibre blanket is preferably sufficient to damp the vibrations of the pipe onto the refractory insulation, but not sufficiently thick to cause an excessive radial depth of the shape to be at undesirably high temperatures. The blanket can be taped temporarily around the pipe until such time as the refractory unit 2 is applied to it.

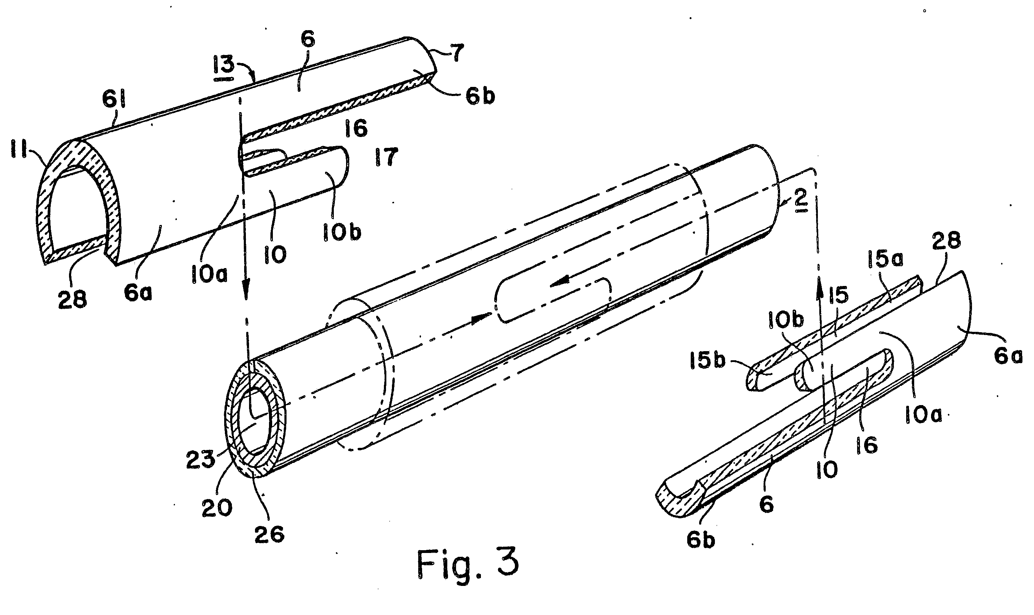

As shown in Figures 2 and 3, the refractory unit 2 includes two substantially identical elongate members 13. Each member 13 has a partially cylindrial body segment 6 having a first end 6a and a second end 6b. A pair of protuberances 10 and 15 each has a first end 10a and 15a respectively which is integral with and extends from the first end 6a of the body segment, a second end 10b and 15b respectively. The protuberances 10 and 15 are angularly spaced apart from the main body 6 by recesses 16 and 19 which correspond in shape to the protuberances. For each member 13, the body segment 6, the recesses 16 and 19, and the protuberances 10 and 15 lie within a substantially common cylindrical surface of rotation. The protuberances 10 and 15 are further spaced apart arcuately by a void 28. The ends 10b and 15b of the protuberances 10 and 15 respectively can be curved or arcuate in order to reduce the stresses which are concentrated at a corner where two surfaces meet.

When one member 13 is rotated 180° around a lateral axis relative to a second member 13 as shown in Figure 3 and both are aligned along a common longitudinal axis, one member is closely received by the other to form a substantially cylindrical, interlocking refractory unit 2. The seams which are defined by the interlocking portions of the refractory unit 2 are substantially closed and resistant to the entry of slag and high-velocity convection which occurs within a metallurgical furnace.

In the preferred embodiment, the water-cooled pipe 20 is first wrapped with a pliable ceramic fibre blanket 26 which is taped around the pipe 20. A first refractory member 13 is positioned upon the blanket-wrapped surface of the pipe 20. The second member 13 is then oriented as described to facilitate the longitudinal engagement of the interlocking protuberances 10 and 15 with the recesses 16 and 19. The two members 13 are urged radially inwardly in order to compress the pliable ceramic fibre blanket and are then pushed longitudinally toward one another in order to interlock and form the unit 2. This procedure is repeated with further members 13 until the desired length of refractory units covers the water-cooled pipe 20. When junctions between horizontal and vertical pipes are reached, reduced lengths of the shapes 13 can be used in order to minimize the remaining exposed segments of pipe.

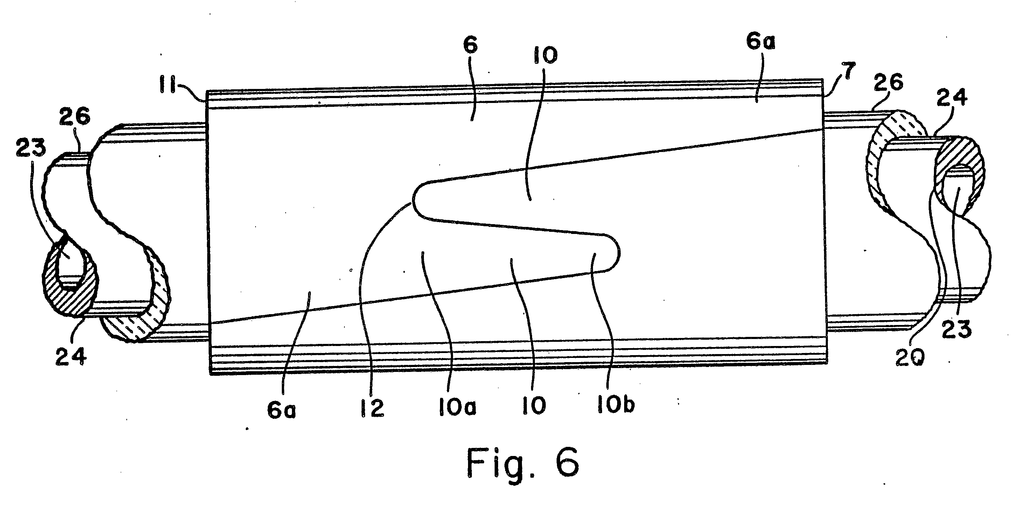

As shown in Figure 6, the protuberances 10 and 15, and the body segment 6 of each member 13 can be conformingly tapered. The tapering of the protuberances and the body segments offers the additional feature of ensuring a more intimate fit of the protuberances 10 and 15 with the recesses 16 and 19 as they are received within the recesses. The more intimate fit can be obtained by over-inserting the two members 13 into an interlocking, abutting relationship and then cutting the end surfaces of the refractory unit 2 so that the end surfaces 7 of each member 13 are substantially aligned with the surfaces 11 when the members 13 are interlocked.

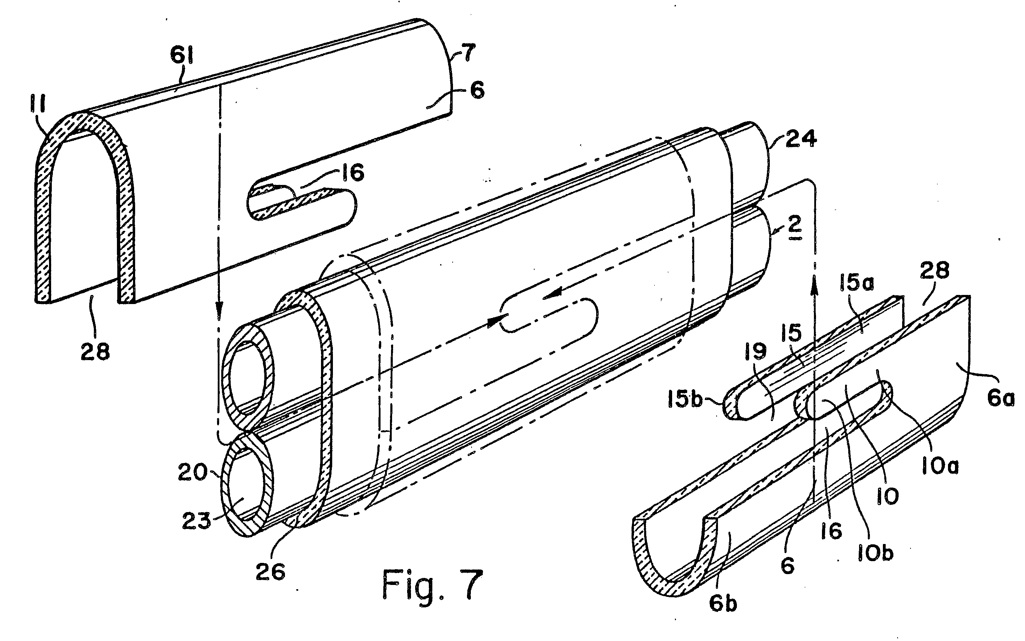

Because of the construction of the pipe structure within a metallurgical furnace, areas occur in which two independent and aligned pipes are in proximity to one another. A modification to the basically cylindrical construction of the present invention as shown in Figure 7 will enable the insulation of these pipes. The basic cylindrical shape is modified to a more oval or elliptical shape such that the pair of parallel pipes can be wrapped in a ceramic fibre blanket and then encapsulated with the more elongated ceramic fibre refractory. It is understood that several numbers and arrangements of pipes can be insulated according to the present invention with an appropriately vacuum-moulded ceramic fibre refractory.

For purposes of economy, the refractory members can be manufactured from a blend of ceramic fibres as a single layer which will permit continuous operation in temperature ranges found in reheat furnaces, and which are sufficiently resistant to attack by slag and furnace gases. However, the temperature range in a metallurgical reheat furnace is generally not constant. Portions of the furnace in proximity to the burners may operate in the 1440°C range while those sections near the flue of the furnace may be closer to the 1055°C temperature range. Consequently, the ceramic fibre shapes near the flue can be less thermally resistant, less resistant to the high temperature corrosive gases within the furnace and hence made from a less expensive blend of fibres than those refractory shapes located near the burner section. Thus, by varying the compositional blends of the various ceramic fibres, the appropriate refractory can be installed in the corresponding areas of the furnace at a minimum of expense.

For purposes of this disclosure, ceramic fibres which substantially retain their thermal resistance characteristics at a continuous operating temperature will be referred to by that temperature; for example, at 1280°C fibre, 1440°C fibre, 1660°C fibre and so forth.

Each ceramic fibre shape may include proportions of a 1280°C ceramic fibre bulk, a 1440°C ceramic fibre bulk and/or a 1660°C ceramic fibre bulk. The precise ratios of one fibre bulk to another is a result of the furnace temperatures encountered, the allowable or desired thickness of the refractory and the preferred cost of manufacture. One acceptable 1280°C basic fibre bulk, called Kaowool, which is manufactured by the Babcock & Wilcox Company, consists primarily of fibres having a 47.0% $Al_2O_3$ and 52.9% $SiO_2$ percent by weight composition. A 1440°C bulk ceramic fibre product is also manufactured by the same company having a 55.0 to 44.9% by molecular weight composition of $Al_2O_3$ and $SiO_2$ respectively. An even more slag-resistant and low thermally conductive 1660°C ceramic fibre bulk is manufactured by the Imperial Chemical Industries Ltd., having a 95.0% and 5.0% by molecular weight of $Al_2O_3$ and $SiO_2$ respectively.

In the cooler regions of the furnace, 5% of a high temperature fibre, such as for example a 1660°C ceramic fibre, can be blended with 95% of lower temperature fibre, for example a 1280°C ceramic fibre, by weight to achieve reasonable temperature and slag resistant ceramic fibre refractory. Another embodiment, suitable for much of the furnace, includes a 60% to 40% by weight ratio of 1660°C ceramic fibre to 1280°C fibre respectively.

The application of a suitable high-temperature slurry coating material such as air- or heat-setting mortar to the outer surface 61 of the members 13 will enhance the slag resistance of the shape. By way of example, and not by way of limitation, one such surface coating is manufactured by A. P. Green Refractories Co. according to the approximate chemical analysis:

| | |
|---|---|
| $SiO_2$ | 1.0—2.0% |
| $Al_2O_3$ | 88—90% |
| $Na_2O+K_2O$ | .1—.3% |
| $Fe_2O_3$ | .05—.2% |
| MgO | .05—.2% |
| $Cr_2O_3$ | 9.0—10.0% |

The resulting compound is a high temperature protective coating providing an additional degree of surface hardness, resistance to slag penetration, and resistance to erosion of the ceramic fibre. Another coating, which is self-curing, contains 95% $ZrO_2$ which can also be applied cold.

The ceramic fibre refractory shapes 13 are suitably produced by a vacuum-forming process.

A slurry is, for example, formulated as follows:

| | |
|---|---|
| 1260°C ceramic fibre bulk | 1.8 kg |
| 1648.9°C ceramic fibre bulk | 2.7 kg |
| colloidal silica | 0.8 kg |
| starch | 0.34 kg |
| water | 266 kg |

The starch tends to maintain the silica binder in a colloidal state during the forming operation and, being organic, is burned out during the subsequent curing operation thereby leaving a substantially inorganic bond.

For best results, the slurry is agitated or stirred in order to assist in the maintenance of the colloidal state within the slurry. A perforated cylindrical male mould whose perforations are in communication with an inner partial vacuum source, is inserted into the slurry. The colloidal silica medium, the starch and the water within the slurry are drawn through the perforations by the vacuum. The ceramic fibres, however, are significantly long and generally do not pass through the perforations of the mould. Hence, the ceramic fibres tend to form a mat of interlaced ceramic fibres around the perforated vacuum mould. The mat around the perforated vacuum mould is generally more dense when nearest the mould and is less dense as it is formed radially outwardly from the mould. By varying the amount of vacuum applied to the perforations of the mould, the density, and to some degree the rigidity, of the mat can be varied. When the desired thickness of the ceramic fibre layer has been deposited on the perforated vacuum mould in the slurry, the mould, is removed from the slurry. The inner surface of the refractory, being closest to the vacuum source, exhibits a textured screen-like appearance. The outer surface, being farther from the vacuum source, is rougher in appearance and is called the bark surface. The bark surface can be, but is not necessarily required to be, smooth. The perforated vacuum mould is then removed from the combination of the deposited ceramic fibre refractory. The refractory is then positioned on a suitably shaped mandrel and cured. The refractory is cured in a temperature range of approximately 82°C to 260°C for a period of four to eight hours. Forced convection in the curing oven will minimize the curing time. The refractory can either be moulded as individual shapes 13, or moulded as a unit 2 and cut into two substantial shapes 13.

The resistance of the refractory to slag attack is enhanced and the porosity of the refractory is reduced by the addition of a suitable refractory granular filler to the slurry of the fibres during the vacuum-forming operation. Acceptable granular fillers can be, for example, alumina ($Al_2O_3$), zirconia ($Zr_2O$) or chromic oxide ($Cr_2O_3$). The higher the content of the alumina ($Al_2O_3$) the more resistant to temperature, slags degradation and furnace gases is the resulting ceramic fibre. Those skilled in the art realize that the ingredients of the slurry can be varied at will in order to optimize the operating characteristics of the refractory with its cost of manufacture for a given continuous operating temperature. The blend can further be varied during the vacuum forming operation in order to deposit an increasingly greater amount of $Al_2O_3$ in a direction radially outward.

The ceramic fibre members of the invention not only save energy by reducing the heat loss within a metallurgical furnace, but also substantially reduces the energy requirement to cure the refractory itself. For example, dense prefired ceramic refractories have generally required curing at a temperature of 1500°C. Approximately sixteen hours are required to fire a furnace to 1500°C. The conventional preburned ceramic refractories have then been cured at 1500°C for six to eight hours. The furnace has then slowly been cooled from 1500°C to ambient temperature and the fired refractories have then been removed from the furnace. The total time involved has been thirty to forty hours and the energy required to produce the requisite temperatures has been immense. Conversely, the manufacture of the interlocking, vacuum-formed ceramic fibre refractory members according to the invention requires an average of only six hours in a continuous oven process at a temperature of 82° to 260°C. Hence, the energy saving during the manufacturing process of the refractory itself is substantial.

In order to ensure an intimate fit around the pipe within the furnace, the refractory unit 2 preferably includes the radially aligned end surfaces 7 and 11 in order to minimize the seams between the installed units 2.

It will be realized that the longer the interlock portion of the member 13, that is the portion generally defined by the interlocking recesses 16, 19 and the protuberances 10 and 15 of each member, the more effective is the resulting interlocking action and stability of the unit 2 around the blanket 26 and the pipe 20. The tapering of the protuberances and conforming recesses further reduces penetration through the seams by the slag and corrosive gases. Because of the remarkably improved weight characteristics of the interlocking, ceramic fibre refractory members of the invention as compared to fire brick or tiles, the weight per lineal foot has been reduced to 4.5 to 9 kilogrammes as opposed to the 52 to 60 kilogrammes per lineal meter for the conventional prefired ceramic refractory tile. Hence, the weight and stress placed upon the water-cooled infrastructure is significantly reduced, and the loads and stresses on the protuberances 10 and 15 are reduced thereby reducing in turn the fractures and failures in those areas. The reduced weight per lineal foot of the members of the present invention substantially reduces the crushing effect on the blanket 26 when the blanket is maintained in compression inside the unit 2, and permits quick installation without additional support means. The resiliency of the new refractory permits it to withstand impact to a far greater degree than conventional refractories.

It is understood by those skilled in the art that the present invention is suitable for application as a process pipe insulation such as those insulations used in the petroleum or utility industry.

The invention greatly reduces heat loss through water-cooled pipes in a metallurgical furnace. For example, in a furnace operating between 1300°C and 1400°C, the approximate following heat losses occur:—

|  | kJ/lineal meter/hour |
|---|---|
| bare pipe | 406,500 |
| prefired ceramic tile | 47,199 |
| interlocking vacuum-formed ceramic fibre | 6.004 |

## Claims

1. A refractory member for insulating a pipe within a metallurgical furnace, said member comprising an arcuate body segment (6) extending longitudinally between both ends of the member, a pair of longitudinally extending arcuate protuberances (10, 15) each of lesser length than the body segment and integrally connected thereto at one end (10a, 15a) while being angularly spaced therefrom by a respective conforming recess (16, 19) so that a second similar refractory member is adapted to interlock with the first said refractory member to form a tubular unit (13+13) suitable for covering and insulating the pipe, adapted to resist vibration and to be positioned on the pipe without means of attachment additional to the interlocking formations (10, 15, 16, 19), characterised in that the said member (13) is vacuum-formed in a light-weight, thermally resistant, slag resistant ceramic fibre refractory material which consists of a blend of ceramic fibres having different continuous operating temperatures and an overall low coefficient of thermal conductivity.

2. A member as claimed in Claim 1, wherein the tubular unit formed by the interlocking members (13) is substantially oval for insulating at least two pipes therein.

3. A member as claimed in Claim 1 or 2, wherein the protuberances (10, 15) are tapered inwardly towards the free ends (10b, 15b) thereof, and the corresponding recesses (16, 19) are conformingly tapered.

4. A member as claimed in Claim 1 or 2, wherein the body segment (6) converges toward the second end (6b) thereof.

5. A member as claimed in Claim 1 or 2, wherein the free ends (10b, 15b) of the protuberances (10, 15) are arcuate and the recesses (16, 19) are conformingly configured thereby reducing the concentration of stresses in the area of the recesses.

6. A member as claimed in Claim 1 or 2, wherein the refractory includes at least 50% $Al_2O_3$ by weight.

7. A member as claimed in Claim 1 or 2, wherein the percentage by weight of $Al_2O_3$ increases within the refractory in a radially outwardly direction.

8. A member as claimed in Claim 1 or 2, wherein the refractory includes a blend of a first ceramic fibre having at least 95% by weight of $Al_2O_3$ and a second ceramic fibre having at least 47% but less than 95% by weight of Al$_2$O$_3$ in a ratio of 3:2 by weight respectively.

9. A member as claimed in Claim 4, wherein the arcuate body segment (6) is a partial oval or ellipse whereby as the two members are interlocked into a refractory unit, the unit is substantially oval or elliptical whereby at least two pipes can be disposed therein.

## Patentansprüche

1. Feuerfestes Glied zur Isolierung einer Röhre innerhalb eines metallurgischen Ofens, welches Glied ein bogenförmiges, sich zwischen den beiden Enden des Glieds entlangerstreckendes Körpersegment (6) aufweist, sowie zwei sich entlangerstreckende bogenförmige Vorsprünge (10, 15), die jeweils eine kleinere Länge als das Körpersegment aufweisen und mit diesem an einem ihrer Ende (10a bzw. 15a) einstückig verbunden und vom Körpersegment durch eine entsprechende Einbactung (16 bzw. 19) winklig getrennt sind, so dass ein zweites ähnliches feuerfestes Glied mit dem ersten genannten feuerfesten Glied eingerastet werden kann, um eine röhrenförmige Einheit (13+13) zu bilden, die zum Bedecken und Isolieren der Röhre geeignet ist und die nur durch die eingerasteten Bildungen (10, 15, 16, 19) erschütterungsfrei auf der Röhre gehalten wird, welches Glied (13) dadurch gekennzeichnet ist, dass es vakuumgeformt wird in einem leichten, hitze- und schlackenbeständigen, feuerfesten, keramischen Faserwerkstoff, der aus einem Gemisch keramischer Faser besteht, die verschiedene kontinuierliche Arbeitstemperaturen· und einen gesamten niedrigen Hitzeleitungskoeffizient aufweist.

2. Glied nach Anspruch 1, wobei die durch die eingerasteten Teile (13) gebildete röhrenformige Einheit wesentlich ovalförmig ist, so das mindestens zwei Röhren darin isoliert werden können.

3. Glied nach Anspruch 1 oder 2, wobei die Vorsprünge (10, 15) sich einwärts gegen ihre freie Ende (10b, 15b) verjüngen, und die entsprechenden Einbuchtungen (16, 19) sich anpassend verjüngen.

4. Glied nach Anspruch 1 oder 2, wobei das Körpersegment (6) gegen seine zweite Ende (6b) zusammenläuft.

5. Glied nach Anspruch 1 oder 2, wobei die freien Ende (10b, 15b) der Vorsprünge (10 bzw. 15) bogenförmig sind und die Einbuchtungen anpassend gebildet sind, so dass die Spannungskonzentration im Bereich der Einbuchtungen erniedrigt werden.

6. Glied nach Anspruch 1 oder 2, wobei der feuerfeste Werkstoff mindestens 50 Gew.-% Al$_2$O$_3$ aufweist.

7. Glied nach Anspruch 1 oder 2, wobei das Gewichtsprozent des Al$_2$O$_3$ im feuerfesten Werkstoff radial auswärts zunimmt.

8. Glied nach Anspruch 1 oder 2, wobei der feuerfeste Werkstoff ein Gemisch eines ersten mit mindestens 95 Gewichtsprozent Al$_2$O$_3$ keramischen Fasers und eines zweiten mit mindestens 47 aber minder als 95 Gewichtsprozent Al$_2$O$_3$, in einem Gewichtsverhältnis 3:2, aufweist.

9. Glied nach Anspruch 4, wobei das bogenförmige Körpersegment (6) eine Teilovale oder Teilellipse ist, wobei, bei der Einrastung der beiden Glieder zum Bilden einer feuerfesten Einheit, diese wesentlich ovalförmig oder élliptisch ist, so dass mindestens zwei Röhren darin eingesetzt werden können.

## Revendications

1. Composant réfractaire pour l'isolation d'un tuyau dans un four métallurgique, lequel composant comprend un corps (6) segmentaire courbé, qui s'étend longitudinalement entre les deux extrémités du corps, ainsi que deux protubérances (10, 15) courbées qui s'étendent longitudinalement, chacune desquelles est moins longue que le corps segmentaire et est y attachée par un de ses extrémités (10a; 15a) tout en se se trouvant angulairement séparée du corps par un recoin (16; 19) conforme respectif de telle façon qu'un second composant similaire s'adapte à s'emboîter dans ledit premier composant réfractaire afin de former une unité tubulaire (13+13), qui convient au but de recouvrir et d'isoler le tuyau et qui résiste aux vibrations et peut être monté sur le tuyau sans besoin d'autres moyens que les formations d'emboîtement (10, 15, 16, 19), caractérisé en ce que ledit composant (13) est formé en vacuum à part d'une matière légère consistant en fibres céramiques résistantes à la chaleur et à la scorie, laquelle matière comprend un mélange de fibres céramiques, dont les températures opératives continues sont différentes et dont le coefficient global de conductivité thermale est bas.

2. Composant selon la revendication 1, dans lequel l'unité tubulaire, formée par les composants (13) d'emboîtement, est substantiellement ovale afin d'isoler au moins deux tuyaux montés dans ladite unité.

3. Composant selon la revendication 1 ou 2, dans lequel les protubérances s'éffilent vers l'intérieur et vers leurs extrémités (10b, 15b) libres, et les recoins (16, 19) correspondants s'éffilent conformement.

4. Composant selon la revendication 1 ou 2, dans lequel le corps segmentaire (6) s'amince vers sa seconde extrémité.

5. Composant selon la revendication 1 ou 2, dans lequel les extrémités (10b, 15b) libres des protubérances (10; 15) sont courbées, et les recoins (16, 19) ont une configuration conforme afin de reduire la concentration des sollicitations au niveau des recoins.

6. Composant selon la revendication 1 ou 2, dans lequel la matière réfractaire comprend au moins 50% d'Al$_2$O$_3$ par poids.

7. Composant selon la revendication 1 ou 2, dans lequel le pourcentage d'$Al_2O_3$ par poids s'accroît dans la matière réfractaire en direction radialement vers l'extérieur.

8. Composant selon la revendication 1 ou 2, dans lequel la matière réfractaire comprend un mélange constitue par une première fibre céramique avec au moins 95% d'$Al_2O_3$ par poids et par une seconde fibre céramique avec au moins 47%, mais moins de 95% d'$Al_2O_3$ par poids, en proportion 3:2 par poids respectivement.

9. Composant selon la revendication 4, dans lequel le corps (6) segmentaire courbé est une ovale ou une ellipse partielle, en sorte que quand les deux composants sont emboîtés l'un avec l'autre, ils forment une unité réfractaire substantiellement ovale ou elliptique dans laquelle on peut monter aux moins deux tuyaux.

0 010 385

Fig. I

Fig. 2

Fig. 3

0 010 385

Fig. 4

Fig. 5

Fig. 6

0 010 385

Fig. 7

0 010 385